(19) Europäisches Patentamt / European Patent Office / Office européen des brevets

(11) **EP 3 288 179 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(51) Int Cl.:
*H02P 21/18* *(2016.01)* *H02P 6/182* *(2016.01)*
*H02P 21/13* *(2006.01)*

(21) Anmeldenummer: **17187059.5**

(22) Anmeldetag: **21.08.2017**

(54) **VERFAHREN ZUR SENSORLOSEN BESTIMMUNG DER ORIENTIERUNG DES ROTORS EINES EISENLOSEN PMSM MOTORS**

METHOD FOR SENSORLESS DETERMINATION OF THE ORIENTATION OF THE ROTOR OF AN IRONLESS PMSM MOTOR

PROCÉDÉ DE DÉTERMINATION SANS CAPTEUR DE L'ORIENTATION DU ROTOR D'UN MOTEUR PMSM SANS FER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2016 CH 10782016**

(43) Veröffentlichungstag der Anmeldung:
**28.02.2018 Patentblatt 2018/09**

(73) Patentinhaber: **maxon international ag**
**6072 Sachseln (CH)**

(72) Erfinder:
• **FRICK, Damian**
**CH-8057 Zürich (CH)**

• **MARIÉTHOZ, Jean-Sébastien**
**CH-2562 Port (CH)**
• **TANASKOVIC, Marko**
**14000 Valjevo (RS)**
• **LEHMANN, David**
**CH-1714 Heitenried (CH)**

(74) Vertreter: **Grünecker Patent- und Rechtsanwälte PartG mbB**
**Leopoldstraße 4**
**80802 München (DE)**

(56) Entgegenhaltungen:
EP-A1- 2 924 870     EP-A2- 2 698 916
WO-A1-2010/036744

**Beschreibung**

GEBIET DER ERFINDUNG

Die vorliegende Erfindung liegt im Gebiet der Regelung von elektronisch kommutierten Motoren. Sie betrifft ein Verfahren zur sensorlosen Bestimmung der Orientierung des Rotors eines eisenlosen Permanentmagnet-Synchronmaschinen(PMSM)-Motors.

HINTERGRUND DER ERFINDUNG

Eine der Hauptthemen bei der Regelung von elektronisch kommutierten Motoren ist die Lagebestimmung des Rotors. Die Lagebestimmung des Rotors beinhaltet die Bestimmung des Rotorwinkels, wofür verschiedene Verfahren aus dem Stand der Technik bekannt sind.

Konventionell wird die Lage des Rotors durch Positionssensoren, z.B. Hallsensoren oder Encoder bestimmt. Bei diesen Systemen ist es bekannt, dass die Positionssensoren einen nachteiligen Effekt auf die Verlässlichkeit des Systems sowie auf die Kosten haben.

Um Kosten zu reduzieren und die Robustheit des Systems zu erhöhen, werden daher verschiedene sensorlose Verfahren zur Bestimmung der Position des Rotors bevorzugt, wobei zur Positionsbestimmung u.a. Anisotropien des Motors, Sättigungseffekte, Asymmetrien in der Rotorstruktur oder eine Rotorexzentrizität ausgenützt werden.

Eine Möglichkeit der sensorlosen Bestimmung besteht in der Messung der induzierten Spannung (EMK) durch den rotierenden Permanentmagneten und der Auswertung der Nulldurchgänge. Diese Methode hat allerdings den Nachteil, dass eine minimale Drehzahl des Rotors erforderlich ist, um eine genügend grosse Amplitude der EMK für ein ausreichendes Signal/Rausch-Verhältnis zur Positionsbestimmung zu erhalten. Bei Stillstand ist diese Methode im Prinzip ungeeignet. In der Praxis wird der Motor daher oft durch einen speziellen Anlaufvorgang ohne Kenntnis der Rotorlage in Bewegung versetzt, um eine minimale Drehzahl zu erreichen, bei welcher die Messmethode mittels der EMK angewendet werden kann.

Eine weitere Methode zur Bestimmung der Rotorlage stellt das INFORM-Verfahren (Indirect flux detection by on-line reactance mesaurement) dar, welche von M. Schroedl entwickelt wurde und z.B. in ETEP Vol. 1, No. 1, January/February 1991, p.47-53 beschrieben wird, und welche für Stillstand sowie kleine Drehzahlen geeignet ist. Beim INFORM-Verfahren werden die Stromanstiege der Phasen aufgrund von bestimmten Test-Spannungsvektoren ausgewertet, um die komplexe Stator-Induktivität in den verschiedenen Raumzeigerrichtungen zu bestimmen. Aus der Stator-Induktivität wird dann die Rotorlage bestimmt. Ein Nachteil dieses Verfahrens für eisenlose PMSM-Motoren sind die hohen auftretenden Ströme beim Anlegen der Spannungsvektoren, welche zu Verzerrungen der Ströme und mit ihnen zu Pendelmomenten führen können.

Die EP2924870 A1 beschreibt ein Verfahren zur Bestimmung der Position des Rotors eines Polyphasenmotors, d.h. des Rotorwinkels, insbesondere im Stillstand. Das Verfahren umfasst die Schritte: Anlegen einer Spannung an den Phasen des Motors; Messen des Stromes in den Phasen; Bestimmen der Rotorposition basierend auf dem gemessenen Strom. Die Bestimmung der Rotorposition basiert auf Stromwerten, welche während einer Periode mit Spannung Null an den Phasen des Motors gemessen werden.

Bei den beschriebenen Verfahren zur Bestimmung der Rotorlage wird der Rotorwinkel bestimmt, wobei die Orientierung (oder Polarität) des Rotors im Prinzip unbestimmt bleibt. Es besteht also eine Unbestimmtheit von 180° in der Bestimmung der Rotorlage.

Die EP 2 698 916 A2 offenbart die Bestimmung der Orientierung des Rotors der elektrischen Maschine basierend auf den Strömen und Spannungen im rotorfesten Koordinatensystem sowie einer berechneten Induktivität.

Bei bekannten Verfahren kann die Polarität des Rotors unter Nutzung von Sättigungseffekten bestimmt werden, indem in eine geschätzte d-Richtung ein Strom in den Statorwindungen eingeprägt wird. Bei einem Strom in positiver d-Richtung erhöht sich die Sättigung, in negativer d-Richtung wird diese reduziert. Beim INFORM-Verfahren kann die Polarität des Rotors z.B. bestimmt werden, indem ein Strom in die vermutete d-Richtung angelegt wird, wobei der Stromanstieg grösser ist, wenn der Strom in positiver d-Richtung eingeprägt wird. Der angelegte Strom muss dabei genügend gross sein, um eine signifikante Änderung des magnetischen Flusses herbeizuführen, wobei diese Methode umso besser funktioniert, je grösser der angelegte Strom ist. Insbesondere bei Motoren mit eisenloser Wicklung hat dies den Nachteil, dass der Strom von einer Grösse sein sollte, bei welchem der Motor und die Kontrollelektronik Schaden nehmen würden. Dies hat ausserdem die nachteilhafte Folge, dass bei einer Abweichung der vermuteten d-Richtung des angelegten Stroms von der tatsächlichen d-Richtung ein Drehmoment erzeugt wird, welcher eine u.U. erhebliche Bewegung des Rotors verursachen kann.

In einem weiteren bekannten Verfahren, welches z.B. von D. Basic, F. Malrait and P. Rouchon in Industrial Electronics, IEEE Transactions on, vol. 58, no. 9, p. 4010-4022 beschrieben wird, wird die Position und die Polarität des Rotors bestimmt, indem ein harmonischer Strom in den Stator eingeprägt wird, welcher Oszillationen des Rotor hervorruft.

Die induzierten Oszillationen der EMK können in der Statorspannung bei der Einprägungsfrequenz gemessen werden, wobei die räumliche Lage des Rotors aus der Phase dieser spektralen Komponente der Statorspannung bestimmt werden kann. Bei einem Motor mit einer magnetischen Schenkligkeit werden, um die Polarität des Rotors zu bestimmen, zusätzliche harmonische Stromregler bei doppelter Frequenz verwendet, wobei die Polarität von der zweiten harmonischen Spannungskomponente hergeleitet werden kann. Bei Motoren ohne magnetische Schenkligkeit muss wieder auf Sättigungseffekte zurückgegriffen werden. Nachteilig an den Methoden basierend auf Rotoroszillationen ist, dass die Oszillationen erhebliche Bewegungen des Rotors hervorrufen können, u.a. Auslenkungen von bis zu +/-60°, um verlässliche Ergebnisse zu erhalten.

## DARSTELLUNG DER ERFINDUNGEN

Unter den bürstenlosen Motoren bieten für zahlreiche Anwendungen eisenlose bzw. nutenlose Motoren entscheidende Vorteile wie z.B. kein magnetisches Rastmoment, hoher Wirkungsgrad, kleine Induktivität etc. Nebst diesen Vorteilen erfordern aber die Eigenschaften dieser Motoren in der Regel alternative Methoden zur Regelung des Motors. Zum Beispiel ist in Bezug auf die Positionsbestimmung die Anisotropie bei diesen Motoren klein und eine Positionsbestimmung basierend auf der Reluktanzanisotropie nicht oder nur beschränkt durchführbar. Ebenso sind die bekannten Methoden basierend auf Sättigungseffekten nicht oder nur Beschränkt anwendbar.

Für wichtige Anwendungsgebiete von eisenlosen PMSM Motoren, u.a. in der Medizintechnik wie z.B. Dentaltechnik oder Insulinpumpen, sind zudem grosse Bewegungen nicht erwünscht oder nicht erlaubt. Es sind daher Positionsbestimmungsverfahren bei Stillstand erwünscht, bei welchen nur kleine Bewegungen erzeugt werden, wobei die Verfahren aus den eingangs genannten Gründen sensorlos funktionieren sollen.

Diese Überlegungen gelten sowohl für die Bestimmung des Rotorwinkels als auch für die Bestimmung der Orientierung, bzw. der Polarität des Rotors.

Es ist daher eine Aufgabe der Erfindung, ein Verfahren zur Bestimmung der Orientierung eines eisenlosen PMSM Motors bereitzustellen, der den Stand der Technik diesbezüglich mindestens teilweise verbessert.

Diese Aufgabe wird durch die Merkmale der unabhängigen Ansprüche 1 und 15 gelöst. Bevorzugte Ausgestaltungen der Erfindung sind in den abhängigen Ansprüchen und in der vorliegenden Offenbarung gegeben.

Die Erfindung betrifft ein Verfahren zur sensorlosen Bestimmung der Orientierung des Rotors eines eisenlosen nutenlosen PMSM Motors aus einem bekannten Rotorwinkel, umfassend die Schritte:

a) Festlegen eines Rotorsystems als das durch eine Park-Transformation erhaltene rotorfeste Koordinatensystem gemäss dem Rotorwinkel;
b) Anlegen von Spannungspulsen an den Phasen des Motors in der drehmomentbildenden Richtung des Rotorsystems;
c) Messen des Stroms in den Phasen des Motors;
d) Bestimmung der erwarteten Gegen-EMK entlang der flussbildenden Achse aus dem gemessenen Strom;
e) Bildung eines Integrals der erwarteten Gegen-EMK durch Zeitintegration der erwarteten Gegen-EMK entlang der flussbildenden Achse und/oder Bildung einer filterbasierten Kumulationsfunktion;
f) Bestimmung der Orientierung des Rotors aus dem Vorzeichen des Integrals der erwarteten Gegen-EMK entlang der flussbildenden Achse und/oder dem Vorzeichen der filterbasierten Kumulationsfunktion.

Die Erfindung betrifft außerdem ein Motorsystem zur Bestimmung der Orientierung des Rotors eines eisenlosen PMSM Motors aus einem bekannten Rotorwinkel, umfassend eine Verarbeitungseinheit zur Bildung eines Integrals der erwarteten Gegen-EMK und/oder der filterbasierten Kumulationsfunktion, ein Speicher zum Speichern eines vorbestimmten Schwellenwerts des Integrals der erwarteten Gegen-EMK, eine Vergleichseinheit zum Vergleichen des Integrals der erwarteten Gegen-EMK mit dem vorbestimmten Schwellenwert, wobei das Motorsystem zur Durchführung eines Verfahrens, umfassend die Schritte des erfindungsgemäßen Verfahrens, geeignet ist.

Dem Fachmann ist das Rotorsystem bekannt als das durch die Park-Transformation erhaltene rotorfeste Koordinatensystem. In einer bevorzugten Ausgestaltung ist das Rotorsystem das auf dem Gebiet der Motorregelung bekannte d/q-Rotorsystem, wobei die flussbildende Richtung die d-Richtung bzw. d-Achse ist und die drehmomentbildende Richtung die q-Richtung bzw. q-Achse ist.

Das erfindungsgemässe Verfahren bietet den Vorteil, dass eine Bestimmung der Orientierung des Rotors mit einer kleinen Bewegung des Rotors ermöglicht wird. Im Vergleich zum Stand der Technik, in welchem zur Bestimmung der Polarität ein Strom in der flussbildenden Richtung angelegt wird, welcher gross sein muss, um ein signifikantes Signal zu erhalten, was insbesondere für eisenlose Motoren schädlich sein kann, oder in welchem die Orientierung basierend auf Rotoroszillationen bestimmt wird, was grosse Bewegungen verursacht, kann beim erfindungsgemässen Verfahren vorteilhafterweise eine kleine Bewegung des Rotors sichergestellt werden, da die Spannungspulse in der drehmomentbildenden Richtung angelegt werden. Eine von der tatsächlichen Lage abweichende Abschätzung der drehmomentbildenden Richtung hat daher vorteilhafterweise nur eine kleine Auswirkung auf das effektiv hervorgerufene Drehmoment. Dass eine bekannte Rotorlage, bzw. ein bekannter Rotorwinkel, zur Bestimmung der Orientierung benutzt wird, bietet den weiteren Vorteil, dass grössere unerwünschte Bewegungen des Rotors, welche zur Bestimmung des Rotorwinkels nötig wären, reduziert werden können, und nur die Bewegungen, welche für die Bestimmung der Orientierung erforderlich sind, ausgeführt werden. Ein weiterer Vorteil des erfindungsgemässen Verfahrens besteht darin, dass durch das Bilden des Integrals der erwarteten Gegen-EMK die einzelnen Spannungspulse klein bleiben können und somit das Risiko von ungewollten grossen Bewegungen reduziert wird. Aus dem Vorzeichen des Integrals der erwarteten Gegen-EMK kann die Orientierung bestimmt werden, wobei bei einem negativen Vorzeichen geschlossen werden kann, dass die flussbildende Richtung des Rotors entgegen der gemäss dem Rotorwinkel festgelegten flussbildenden Richtung zeigt und eine 180°-Korrektur der festgelegten flussbildenden Richtung erforderlich ist. Bei einem positiven Vorzeichen kann geschlossen werden, dass die festgelegte flussbildende Richtung der tatsächlichen flussbildenden Richtung des Rotors entspricht.

Durch das Bilden einer filterbasierten Kumulationsfunktion oder anderen analogen Verfahren kann das Signal-Rausch-Verhältnis erhöht werden. In gewissen Anwendungen kann die Kumulationsfunktion nur Werte aus bestimmten Zeitabschnitten übernehmen.

Das erfindungsgemässe Verfahren ist besonders für eisenlose bzw. nutenlose Motoren geeignet.

Das erfindungsgemässe Verfahren ist vorteilhafterweise für Polyphasenmotoren unabhängig von der Polzahl gleichermassen geeignet, z.B. eignet sich das Verfahren für zweipolige ebenso wie für vierpolige Motoren.

Vorzugsweise ist die summierte Bewegung des Rotors durch Anlegen der Spannungspulse kleiner als 25°, besonders bevorzugt kleiner als 10°. In weiteren besonders bevorzugten Ausgestaltungen ist die summierte Bewegung des Rotors kleiner als 5°.

In einer bevorzugten Ausgestaltung des Verfahrens wird zur Bestimmung der erwarteten Gegen-EMK entlang der flussbildenden Achse allein der gemessene Strom bei Spannung Null an den Phasen des Motors verwendet.

In der Regel wird der Strom in der Periode zwischen zwei Spannungspulsen, in welcher die Spannung Null ist, gemessen. Die Verwendung des Stroms, welcher bei Spannung Null an den Phasen des Motors gemessen wird, hat den Vorteil, dass die Abhängigkeit zum Systeminput reduziert wird, da in der Bestimmung der Stromwerte keine Spannungsterme mehr auftauchen. Stattdessen wird vorteilhafterweise die Beziehung zwischen konsekutiven Systemoutputs verwendet. Dies hat daher die vorteilhafte Folge, dass das System robuster gegenüber Rauschen und Spannungsverzerrungen wird. Die Messungen können überdies in kürzerer Zeit ausgeführt werden.

Bevorzugt wird das Anlegen der Spannungspulse abgebrochen, sobald das Integral der erwarteten Gegen-EMK und/oder die Kumulationsfunktion einen vorbestimmten Schwellenwert erreicht.

Die Spannungspulse werden mit Vorteil nur solange angelegt, bis das Integral der erwarteten Gegen-EMK und/oder die Kumulationsfunktion genügend gross wird, so dass das Vorzeichen des Integrals bestimmt werden kann. Damit kann die Bewegung des Rotors weiter minimal gehalten werden.

In einer bevorzugten Ausgestaltung des Verfahrens wird nach dem Anlegen von Spannungspulsen mindestens ein Gegenpuls angelegt, welche den Rotor in die Ursprungsposition zurückbewegt.

Das Anlegen des mindestens einen Gegenpulses hat den Vorteil, dass sichergestellt wird, dass der Rotor nach der Bestimmung der Orientierung wieder in seine Ursprungsposition zurückgebracht wird. Bevorzugt ist der mindestens eine Gegenpuls derart ausgebildet, dass die angelegten Spannungspulse exakt kompensiert werden. Da bei der Zurückbewegung des Rotors vorzugsweise keine Messung und/oder Auswertung durchgeführt wird, können die Gegenpulse eine grössere Amplitude als die Spannungspulse zur Bestimmung der Orientierung aufweisen. Alternativ oder in Ergänzung kann die Periode zwischen den Gegenpulsen kürzer als die Periode zwischen den Spannungspulsen sein. Alternativ oder in Ergänzung kann ein einzelner Gegenpuls angelegt werden, welcher eine Serie von Spannungspulsen kompensiert.

In einer Ausgestaltung werden die Gegenpulse in der negativen drehmomentbildenden Richtung des festgelegten Rotorsystems angelegt.

In einer weiteren Ausgestaltung wird ein Gegenpuls in der negativen drehmomentbildenden Richtung des festgelegten Rotorsystems angelegt, wobei der Gegenpuls ein Integral der angelegten Spannungspulse ist.

Alternativ kann der Gegenpuls in der flussbildenden Richtung der bestimmten Orientierung des Rotors angelegt werden. Da die Orientierung des Rotors zu diesem Zeitpunkt des Verfahrens bekannt ist, kann der Gegenpuls in der flussbildenden Richtung der bestimmten Orientierung des Rotors angelegt werden, um den Rotor in seine ursprüngliche Lage zurückzudrehen.

In einer vorteilhaften Ausgestaltung wird nach dem Anlegen des mindestens einen Gegenpulses ein Kompensierungspuls angelegt. Der Kompensierungspuls dient vorteilhafterweise dazu, die durch den mindestens einen Gegenpuls hervorgerufenen Ströme in den Phasen des Motors schneller als ohne Kompensierungspuls abklingen zu lassen. Bevorzugt wird der Kompensierungspuls entlang der Richtung der zur Orientierungsbestimmung angelegten Spannungspulse, d.h. vorzugsweise entlang der drehmomentbildenden Richtung des Rotorsystems, angelegt.

In einer Ausgestaltung sind die Spannungspulse Rechteckpulse, wobei die Amplitude der Spannungspulse über die Zeit variiert wird.

Bevorzugt wird die Amplitude der Spannungspulse in Abhängigkeit der Amplitude der erwarteten Gegen-EMK entlang der flussbildenden Achse variiert.

In der Regel hängt die Amplitude der erwarteten Gegen-EMK vom Trägheitsmoment der mechanischen Bestandteile des Systems bzw. des Motors, welche in der Regel nicht bekannt ist, und der Amplitude der angelegten Spannungspulse ab. Diese Abhängigkeit kann vorteilhafterweise genutzt werden, um die Geschwindigkeit des Motors zu erhöhen und die Bestimmung der Orientierung des Rotors zu beschleunigen. Insbesondere kann die Amplitude der Spannungspulse über die Zeit in Abhängigkeit der Amplitude der erwarteten Gegen-EMK erhöht werden, um die Bestimmung der Orientierung des Rotors zu beschleunigen.

Alternativ oder in Ergänzung wird die Zeit zwischen zwei Spannungspulsen variiert.

Die Möglichkeit der Variation der angelegten Spannungspulse, insbesondere in Abhängigkeit der bestimmten erwarteten Gegen-EMK ist insofern vorteilhaft, als eine zusätzliche Regelungsmöglichkeit bereitgestellt wird und die Flexibilität des Verfahrens erhöht wird.

In einer Ausgestaltung des Verfahrens wird die erwartete Gegen-EMK entlang der flussbildenden Achse gefiltert.

Das Filtern dient vorteilhafterweise zur Reduktion des Rauschens der Messung und soll das Signal-Rausch-Verhältnis erhöhen.

In einer Ausgestaltung wird zur Bestimmung der erwarteten Gegen-EMK entlang der flussbildenden Achse der gemessene Strom über eine Anzahl von Messpunkten gemittelt.

Alternativ oder in Ergänzung wird zur Bestimmung der erwarteten Gegen-EMK entlang der flussbildenden Achse ein Kalman Filter oder ein Luenberger-Beobachter verwendet.

In einer bevorzugten Ausgestaltung des Verfahrens wird der bekannte Rotorwinkel umfassend die folgenden Schritte bestimmt:

a) Anlegen von Spannungspulsen an den Phasen des Motors;

b) Messen eines Stromes in den Phasen;

c) Bestimmen des Rotorwinkels aus dem gemessenen Strom, wobei zur Bestimmung des Rotorwinkels allein der gemessene Strom bei Spannung Null an den Phasen des Motors verwendet wird.

Dieses Verfahren zur Bestimmung des bekannten Rotorwinkels hat den Vorteil, dass die Bestimmung auf der Beziehung zwischen konsekutiven Systemoutputs basiert und die Abhängigkeit vom Systeminput reduziert wird. Weiter wird vorteilhafterweise die Robustheit gegenüber Rauschen und gegenüber Spannungsverzerrungen erhöht. Der so bestimmte Rotorwinkel erhöht vorteilhafterweise die Genauigkeit der Position des Rotors, was sich positiv auf die Bestimmung der Orientierung des Rotors auswirkt, ohne die Effizienz des Verfahrens zu reduzieren.

LISTE DER FIGUREN

Es zeigen:

Fig. 1      eine schematische Darstellung der angelegten Spannungspulse im d/q-System;

Fig. 2      eine Darstellung der gemessenen Ströme in den Phasen des Motors;

Fig. 3      eine Darstellung der in das d/q-System transformierten Ströme;

Fig. 4a, b      eine Darstellung der erwarteten Gegen-EMK entlang der d-Achse und des Integrals der erwarteten Gegen-EMK;

Fig. 5      eine Darstellung der Verschiebung der Rotorposition während dem Anlegen der Spannungspulse.

BESCHREIBUNG EXEMPLARISCHER AUSFÜHRUNGSFORMEN

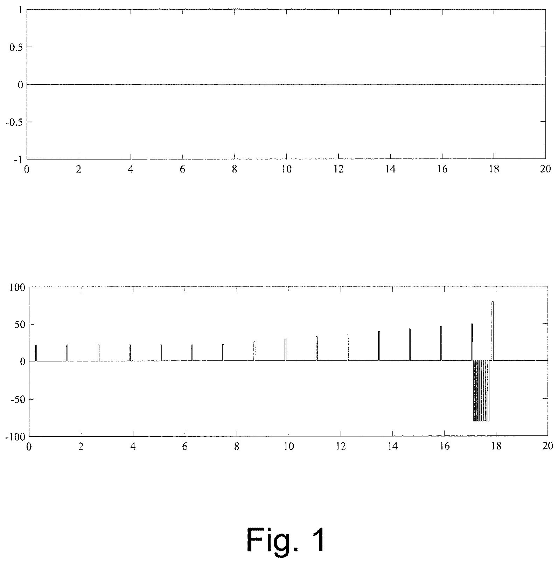

Figur 1 zeigt eine schematische Darstellung der angelegten Spannungspulse im festgelegten d/q-System des Rotors, welche gemäss dem bekannten Rotorwinkel festgelegt worden ist. Im Diagramm oben wird die Spannung (y-Achse, in arbiträren Einheiten) entlang der festgelegten d-Achse gegen die Zeit (x-Achse, in ms) gezeigt. Im Diagramm unten wird die Spannung (y-Achse, in arbiträren Einheiten) entlang der festgelegten q-Achse gegen die Zeit (x-Achse, in ms) gezeigt. Der Rotorwinkel stammt aus einer Positionsbestimmungsmethode, welche vor der Orientierungsbestimmung, bzw. vor dem Anlegen der Spannungspulse, durchgeführt wird. Als Orientierung der d-Achse wird eine Richtung entlang der bekannten Rotorachse arbiträr festgelegt, so dass eine 180°-Unbestimmtheit verbleibt. Wie in Figur 1 ersichtlich, wird eine Serie von Spannungspulsen entlang der q-Richtung des festgelegten d/q-Systems des Rotors angelegt. Bis zu t=17 ms werden positive Spannungspulse angelegt. Im gezeigten Ausführungsbeispiel des Verfahrens wird die Amplitude der positiven Spannungspulse variiert, die Periode dieser Spannungspulse aber konstant gelassen. Alternativ oder in Ergänzung kann auch die Periode der Spannungspulse variiert werden. In der Regel hängt die Gegen-EMK vom Trägheitsmoment des mechanischen Systems, welche in der Regel nicht bekannt ist, und von der Amplitude der Spannungspulse ab. Die Spannungspulse können daher je nach Output der Gegen-EMK variiert werden, um die Orientierung des Rotors schneller bestimmen zu können. Nach t=17 ms wird die Orientierung des Rotors bestimmt. Nach der Bestimmung der Orientierung des Rotors wird eine Serie von negativen Gegenpulsen angelegt, wobei alle negativen Gegenpulse die gleiche Amplitude aufweisen. Die Gegenpulse sind derart ausgewählt, dass der Rotor, der durch die Serie der positiven Spannungspulse um einen Winkel $\alpha$ bewegt wurde, wieder in seine Ursprungsposition zurückbewegt wird. Da während der Rückkehr des Rotors in die Ursprungsposition keine Signale ausgewertet werden müssen, kann die Periode zwischen den Gegenpulsen kurz gehalten werden. Ebenso kann die Amplitude der Gegenpulse grösser gewählt werden als die positiven Spannungspulse, da grössere Bewegungen pro Spannungspuls tolerierbar sind. Nach der Serie der negativen Gegenpulsen wird ein Kompensierungspuls angelegt, der dazu dient, die durch die Gegenpulse hervorgerufenen Ströme in den Phasen des Motors schneller abklingen zu lassen, als dies der Fall ohne Kompensierungspuls wäre.

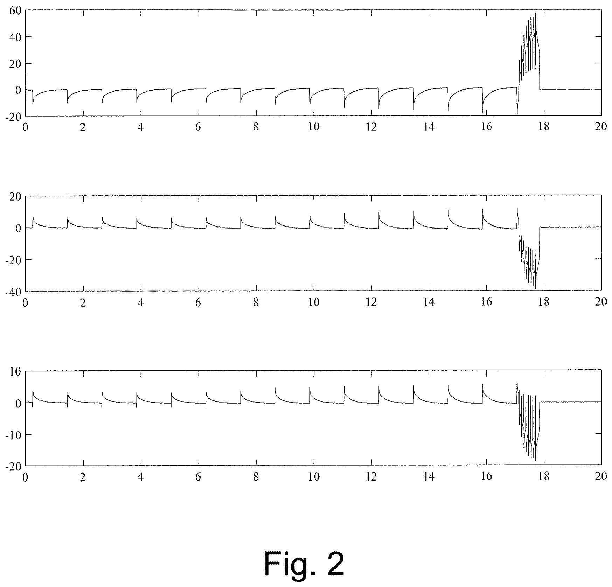

Figur 2 zeigt den gemessenen Strom in den drei Phasen des Motors (a-, b-, c-Ströme). Das erste Diagramm oben zeigt den Strom (y-Achse, in arbiträren Einheiten) in der a-Phase gegen die Zeit (x-Achse, in ms). Das zweite Diagramm in der Mitte zeigt den Strom (y-Achse, in arbiträren Einheiten) in der b-Phase gegen die Zeit (x-Achse, in ms). Das dritte Diagramm unten zeigt den Strom (y-Achse, in arbiträren Einheiten) in der c-Phase gegen die Zeit (x-Achse, in ms). Der Strom entlang der d-Achse des festgelegten d/q-Rotorsystems ermöglicht die Bestimmung der erwarteten Gegen-EMK entlang der d-Achse. Zu diesem Zweck werden die Ströme in den Phasen des Motors wie folgt in das d/q-Rotorsystem transformiert:

$$\begin{pmatrix} t_d \\ t_q \end{pmatrix} = \begin{pmatrix} \cos(\theta) & \cos\left(\theta - \dfrac{2\pi}{3}\right) & \cos\left(\theta - \dfrac{4\pi}{3}\right) \\ -\sin(\theta) & -\sin\left(\theta - \dfrac{2\pi}{3}\right) & -\sin\left(\theta - \dfrac{4\pi}{3}\right) \end{pmatrix} \begin{pmatrix} t^a \\ t^b \\ t^c \end{pmatrix}$$

Dabei bezeichnet $\theta$ den zuvor bestimmten Rotorwinkel.

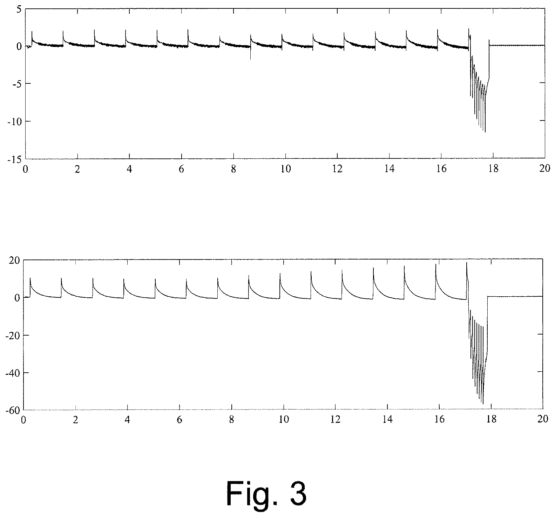

Figur 3 zeigt die in das festgelegte d/q-Rotorsystem transformierten Ströme. Das Diagramm oben zeigt den Strom (y-Achse, in arbiträren Einheiten) entlang der festgelegten d-Achse gegen die Zeit (x-Achse, in ms). Das Diagramm unten zeigt den Strom (y-Achse, in arbiträren Einheiten) entlang der festgelegten q-Achse gegen die Zeit (x-Achse, in ms). Aus dem Strom entlang der d-Achse kann die erwartete Gegen-EMK entlang der d-Achse bestimmt werden, wobei in der gezeigten Ausführung der Strom während Spannung Null an den Phasen des Motors verwendet wird. Die dynamische Gleichung, welche den Strom der relevanten Stromsamples (in den Perioden mit Spannung Null) beschreibt, ist

$$t_d^{R+1} = a * t_d^R + GEMK_d$$

wobei $a$ ein Motorparameter abhängig vom Widerstand und der Induktivität ist und durch bekannte Motoridentifikationsmethoden bestimmt werden kann. $GEMK_d$ ist die Gegen-EMK entlang der d-Achse bzw. die auf die d-Achse des festgelegten d/q-Rotorsystems projizierte Gegen-EMK, welche aus dem gemessenen Strom bestimmt wird. Mit $R$ werden die verschiedenen Perioden nummeriert, d.h. die Gegen-EMK kann aus konsekutiven Stromsamples entlang der d-Achse bestimmt werden. Die erwartete Gegen-EMK entlang der d-Achse zur Orientierungsbestimmung kann direkt aus der dynamischen Gleichung berechnet und über mehrere Messpunkte gemittelt werden. Alternativ oder in Ergänzung kann ein Kalman-Filter oder ein Luenberger-Beobachter eingesetzt werden.

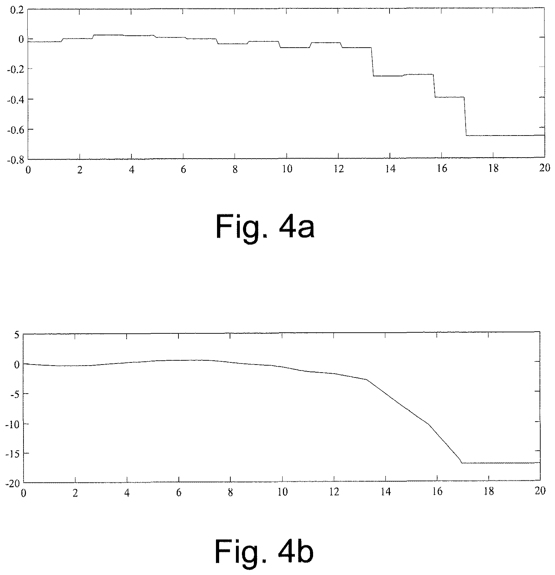

Figur 4a zeigt die aus der dynamischen Gleichung und durch Mittelung erhaltene erwartete Gegen-EMK entlang der d-Achse. Die Gegen-EMK (y-Achse, in arbiträren Einheiten) ist gegen die Zeit (x-Achse, in ms) aufgetragen. Figur 4b zeigt das Integral der erwarteten Gegen-EMK, welche durch Zeitintegration aus der erwarteten Gegen-EMK entlang der d-Achse aus Fig. 4a ermittelt wird. Das Integral der Gegen-EMK (y-Achse, in arbiträren Einheiten) ist gegen die Zeit (x-Achse, in ms) aufgetragen. Bei t=17 ms erreicht das Integral der erwarteten Gegen-EMK einen vorbestimmten Schwellenwert, bei welchem das Vorzeichen des Integrals der Gegen-EMK ermittelt wird. In der Figur ist das Vorzeichen des Integrals bei Erreichen des Schwellenwerts negativ, woraus bestimmt werden kann, dass die Orientierung des Rotors entgegen der festgelegten d-Achse liegt. Nach Erreichen des Schwellenwerts und der Bestimmung der Orientierung des Rotors bei t=17 ms wird das Anlegen der Spannungspulse unterbrochen und stattdessen eine Serie von negativen Gegenpulsen in q-Richtung gemäss Fig. 1 angelegt, um den Rotor in seine Ursprungsposition zurückzudrehen. Wie in Fig. 4a ersichtlich, führt die Variation der Amplitude der Spannungspulse dazu, dass die Amplitude der erwarteten Gegen-EMK entlang der d-Achse zunimmt und der vorbestimmte Schwellenwert schneller erreicht wird. Die Bestimmung der Orientierung des Rotors kann somit beschleunigt werden, während die Bewegung des Rotors gleichzeitig klein gehalten wird.

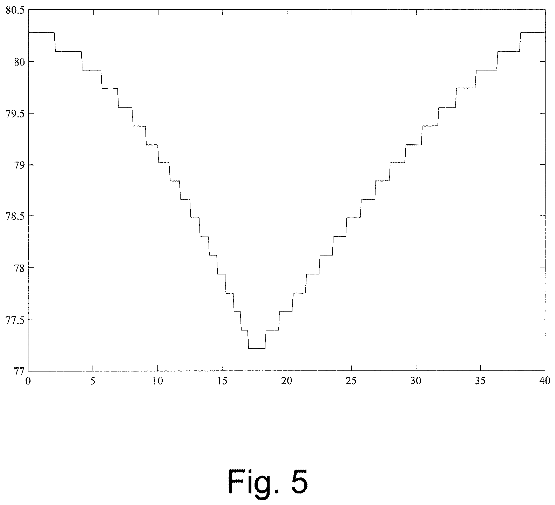

Figur 5 zeigt die Verschiebung der Position des Rotors während dem in Fig.1-4 gezeigten Verfahren zur Bestimmung der Orientierung des Rotors. Der Verschiebungswinkel (y-Achse, in Grad °) ist gegen die Zeit (x-Achse, in ms) aufgetragen. Aufgrund des Anlegens von Spannungspulsen ändert sich die Rotorposition bzw. der Rotorwinkel stufenweise. Der in der Figur gezeigte Rotorwinkel wurde durch einen Inkrementalgeber ermittelt, um auf unabhängige Weise die Positionsentwicklung während dem Verfahren zur Bestimmung der Orientierung darzustellen. Der Inkrementalgeber ist jedoch in der Regel nicht Bestandteil des erfindungsgemässen Verfahrens, bzw. nicht erforderlich zur Bestimmung der Orientierung des Rotors. Die Figur zeigt, dass die Spannungspulse nur zu kleinen Verschiebungen des Rotorwinkels führen und dass die gesamte Bewegung des Rotors kleiner als 4° mechanisch ist. Das Maximum der Verschiebung ist bei t=17 ms erreicht, wo das Anlegen der Spannungspulse abgebrochen wird. Die Gegenpulse führen zu einer schrittweisen Rückwärtsbewegung des Rotors in seine Ursprungsposition. Obwohl die Gegenpulse gemäss Fig. 1 während einem kurzen Zeitraum von ca. 1 ms angelegt werden, wird für die gesamte Rückwärtsbewegung ca. 20 ms benötigt. Grund dafür ist die Trägheit des mechanischen Systems.

**Patentansprüche**

1.  Verfahren zur sensorlosen Bestimmung der Orientierung des Rotors eines eisenlosen nutenlosen PMSM Motors aus einem bekannten Rotorwinkel, umfassend die Schritte:

    a. Festlegen eines Rotorsystems als das durch eine Park-Transformation erhaltene rotorfeste Koordinatensystem gemäss dem Rotorwinkel;
    b. Anlegen von Spannungspulsen an den Phasen des Motors in der drehmomentbildenden Richtung des Rotorsystems;
    c. Messen des Stroms in den Phasen des Motors;
    d. Bestimmung der erwarteten Gegen-EMK entlang derflussbildenden Achse aus dem gemessenen Strom;
    e. Bildung eines Integrals der erwarteten Gegen-EMK durch Zeitintegration der erwarteten Gegen-EMK entlang derflussbildenden Achse und/oder Bildung einer filterbasierten Kumulationsfunktion;
    f. Bestimmung der Orientierung des Rotors aus dem Vorzeichen des Integrals der erwarteten Gegen-EMK entlang der flussbildenden Achse und/oder dem Vorzeichen der filterbasierten Kumulationsfunktion.

2.  Verfahren nach Anspruch 1, **dadurch gekennzeichnet, dass** zur Bestimmung der erwarteten Gegen-EMK entlang der flussbildenden Achse allein der gemessene Strom bei Spannung Null an den Phasen des Motors verwendet wird.

3.  Verfahren nach einem der Ansprüche 1 oder 2, **dadurch gekennzeichnet, dass** das Anlegen der Spannungspulse abgebrochen wird, sobald das Integral der erwarteten Gegen-EMK einen vorbestimmten Schwellenwert erreicht.

4.  Verfahren nach einem der vorhergehenden Ansprüche, **dadurch gekennzeichnet, dass** nach dem Anlegen von Spannungspulsen mindestens ein Gegenpuls angelegt wird, welche den Rotor in die Ursprungsposition zurückbewegt.

5.  Verfahren nach Anspruch 4, **dadurch gekennzeichnet, dass** die Gegenpulse in der negativen drehmomentbildenden Richtung des festgelegten Rotorsystems angelegt werden.

6.  Verfahren nach Anspruch 4, **dadurch gekennzeichnet, dass** ein Gegenpuls in der negativen drehmomentbildenden Richtung des festgelegten Rotorsystems angelegt wird, wobei der Gegenpuls ein Integral der angelegten Spannungspulse ist.

7.  Verfahren nach Anspruch 4, **dadurch gekennzeichnet, dass** der Gegenpuls in der flussbildenden Richtung der bestimmten Orientierung des Rotors angelegt wird.

8. Verfahren nach einem der vorhergehenden Ansprüche, **dadurch gekennzeichnet, dass** die Spannungspulse Rechteckpulse sind, wobei die Amplitude der Spannungspulse über die Zeit variiert wird.

9. Verfahren nach Anspruch 8, **dadurch gekennzeichnet, dass** die Amplitude der Spannungspulse in Abhängigkeit der Amplitude der erwarteten Gegen-EMK entlang der flussbildenden Achse variiert wird.

10. Verfahren nach einem der vorhergehenden Ansprüche, **dadurch gekennzeichnet, dass** die Zeit zwischen zwei Spannungspulsen variiert wird.

11. Verfahren nach einem der vorhergehenden Ansprüche, **dadurch gekennzeichnet, dass** die erwartete Gegen-EMK entlang der flussbildenden Achse gefiltert wird.

12. Verfahren nach einem der vorhergehenden Ansprüche, **dadurch gekennzeichnet, dass** zur Bestimmung der erwarteten Gegen-EMK entlang der flussbildenden Achse der gemessene Strom über eine Anzahl von Messpunkten gemittelt wird.

13. Verfahren nach einem der vorhergehenden Ansprüche, **dadurch gekennzeichnet, dass** zur Bestimmung der erwarteten Gegen-EMK entlang der flussbildenden Achse ein Kalman Filter oder ein Luenberger-Beobachter verwendet wird.

14. Verfahren nach einem der vorhergehenden Ansprüche, **dadurch gekennzeichnet, dass** der bekannte Rotorwinkel umfassend die folgenden Schritte bestimmt wird:

    a. Anlegen von Spannungspulsen an den Phasen des Motors;
    b. Messen eines Stromes in den Phasen;
    c. Bestimmen des Rotorwinkels aus dem gemessenen Strom, wobei zur Bestimmung des Rotorwinkels allein der gemessene Strom bei Spannung Null an den Phasen des Motors verwendet wird.

15. Ein Motorsystem zur Bestimmung der Orientierung des Rotors eines eisenlosen nutenlosen PMSM Motors aus einem bekannten Rotorwinkel, umfassend eine Verarbeitungseinheit zur Bildung eines Integrals der erwarteten Gegen-EMK und/oder der filterbasierten Kumulationsfunktion, ein Speicher zum Speichern eines vorbestimmten Schwellenwerts des Integrals der erwarteten Gegen-EMK, eine Vergleichseinheit zum Vergleichen des Integrals dererwarteten Gegen-EMK mit dem vorbestimmten Schwellenwert, wobei das Motorsystem zur Durchführung eines Verfahrens, umfassend einen Schritt des Festlegens eines Rotorsystems als das durch eine Park-Transformation erhaltene rotorfeste Koordinatensystem gemäss dem Rotorwinkel, einen Schritt des Anlegens von Spannungspulsen an den Phasen des Motors in der drehmomentbildenden Richtung des Rotorsystems, einen Schritt des Messens des Stroms in den Phasen des Motors, einen Schritt der Bestimmung der erwarteten Gegen-EMK entlang der flussbildenden Achse aus dem gemessenen Strom, einen Schritt der Bildung eines Integrals der erwarteten Gegen-EMK durch Zeitintegration der erwarteten Gegen-EMK entlang der flussbildenden Achse und/oder einen Schritt der Bildung einer filterbasierten Kumulationsfunktion sowie einen Schritt der Bestimmung der Orientierung des Rotors aus dem Vorzeichen des Integrals der erwarteten Gegen-EMK entlang der flussbildenden Achs und/oder dem Vorzeichen der filterbasierten Kumulationsfunktion, geeignet ist.

## Claims

1. A method for sensor-free determination of the orientation of the rotor of an ironless unslotted PMSM motor from a known rotor angle, comprising the steps:

    a. specifying a rotor system as the fixed-rotor coordinate system obtained by Park transformation according to the rotor angle;
    b. applying voltage pulses to the phases of the motor in the torque-forming direction of the rotor system;
    c. measuring the current in the phases of the motor;
    d. determining the expected back EMF along the flux-forming axis, based on the measured current;
    e. forming an integral of the expected back EMF by time integration of the expected back EMF along the flux-forming axis and/or forming a filter-based accumulation function;
    f. determining the orientation of the rotor from the algebraic sign of the integral of the expected back EMF along the flux-forming axis and/or the algebraic sign of the accumulation function.

**2.** The method according to Claim 1, **characterized in that** only the measured current at zero voltage at the phases of the motor is used for determining the expected back EMF along the flux-forming axis.

**3.** The method according to one of Claims 1 or 2, **characterized in that** the application of the voltage pulses is terminated as soon as the integral of the expected back EMF reaches a predetermined threshold value.

**4.** The method according to one of the preceding claims, **characterized in that** after the application of voltage pulses, at least one counter pulse is applied that moves the rotor back into the original position.

**5.** The method according to Claim 4, **characterized in that** the counter pulses are applied in the negative torque-forming direction of the specified rotor system.

**6.** The method according to Claim 4, **characterized in that** a counter pulse is applied in the negative torque-forming direction of the specified rotor system, the counter pulse being an integral of the applied voltage pulses.

**7.** The method according to Claim 4, **characterized in that** the counter pulse is applied in the flux-forming direction of the given orientation of the rotor.

**8.** The method according to one of the preceding claims, **characterized in that** the voltage pulses are rectangular pulses, with the amplitude of the voltage pulses being varied over time.

**9.** The method according to Claim 8, **characterized in that** the amplitude of the voltage pulses is varied as a function of the amplitude of the expected back EMF along the flux-forming axis.

**10.** The method according to one of the preceding claims, **characterized in that** the time between two voltage pulses is varied.

**11.** The method according to one of the preceding claims, **characterized in that** the expected back EMF along the flux-forming axis is filtered.

**12.** The method according to one of the preceding claims, **characterized in that** the measured current is averaged over a number of measuring points for determining the expected back EMF along the flux-forming axis.

**13.** The method according to one of the preceding claims, **characterized in that** a Kalman filter or a Luenberger observer is used for determining the expected back EMF along the flux-forming axis.

**14.** The method according to one of the preceding claims, **characterized in that** the known rotor angle is determined comprising the following steps:

      a. applying voltage pulses to the phases of the motor;
      b. measuring a current in the phases;
      c. determining the rotor angle from the measured current, wherein only the measured current when zero voltage is applied to the phases of the motor is used.

**15.** A motor system for determining the orientation of the rotor of an ironless PMSM motor from a known rotor angle, comprising a processing unit for forming an integral of the expected back EMF and/or the filter-based accumulation function, a memory for storing a predetermined threshold value of the integral of the expected back EMF, and a comparator unit for comparing the integral of the expected back EMF to the predetermined threshold value, wherein the motor system is adapted to perform a method comprising a step of specifying a rotor system as the fixed-rotor coordinate system obtained by Park transformation according to the rotor angle, a step of applying voltage pulses to the phases of the motor in the torque-forming direction of the rotor system, a step of measuring the current in the phases of the motor, a step of determining the expected back EMF along the flux-forming axis, based on the measured current, a step of forming an integral of the expected back EMF by time integration of the expected back EMF along the flux-forming axis and/or forming a filter-based accumulation function and a step of determining the orientation of the rotor from the algebraic sign of the integral of the expected back EMF along the flux-forming axis and/or the algebraic sign of the filter-based accumulation function.

**Revendications**

1. Procédé de détermination sans capteur de l'orientation du rotor d'un moteur synchrone à aimants permanents (PMSM) sans fer et sans encoches à partir d'un angle de rotor connu, comprenant les étapes consistant à :

   a. prédéfinir un système de rotor sous la forme d'un système de coordonnées solidaire du rotor, obtenu grâce à une transformation de Park en fonction de l'angle de rotor ;
   b. appliquer des impulsions de tension au niveau des phases du moteur dans le sens de génération de couple du système de rotor ;
   c. mesurer le courant au sein des phases du moteur ;
   d. déterminer la force contre-électromotrice attendue le long de l'axe de formation de flux à partir du courant mesuré ;
   e. former une intégrale de la force contre-électromotrice attendue grâce à une intégration temporelle de la force contre-électromotrice attendue le long de l'axe de formation de flux et/ou former une fonction de cumul basée sur un filtre ;
   f. déterminer l'orientation du rotor à partir du signe de l'intégrale de la force contre-électromotrice attendue le long de l'axe de formation de flux et/ou à partir du signe de la fonction de cumul basée sur un filtre.

2. Procédé selon la revendication 1, **caractérisé en ce que** seul le courant mesuré à tension nulle au niveau des phases du moteur est utilisé pour déterminer la force contre-électromotrice attendue le long de l'axe de formation de flux.

3. Procédé selon l'une quelconque des revendications 1 ou 2, **caractérisé en ce que** l'application des impulsions de tension est interrompue dès que l'intégrale de la force contre-électromotrice attendue atteint une valeur de seuil prédéterminée.

4. Procédé selon l'une quelconque des revendications précédentes, **caractérisé en ce qu'**au moins une impulsion inverse ramenant le rotor dans la position d'origine est appliquée après l'application des impulsions de tension.

5. Procédé selon la revendication 4, **caractérisé en ce que** les impulsions inverses sont appliquées dans le sens négatif de génération de couple du système de rotor prédéfini.

6. Procédé selon la revendication 4, **caractérisé en ce qu'**une impulsion inverse est appliquée dans le sens négatif de génération de couple du système de rotor prédéfini, dans lequel l'impulsion inverse est une intégrale des impulsions de tension appliquées.

7. Procédé selon la revendication 4, **caractérisé en ce que** l'impulsion inverse est appliquée dans le sens de formation de flux de l'orientation déterminée du rotor.

8. Procédé selon l'une quelconque des revendications précédentes, **caractérisé en ce que** les impulsions de tension sont des impulsions rectangulaires, dans lequel l'amplitude des impulsions de tension est variée dans le temps.

9. Procédé selon la revendication 8, **caractérisé en ce que** l'amplitude des impulsions de tension est variée en fonction de l'amplitude de la force contre-électromotrice attendue le long de l'axe de formation de flux.

10. Procédé selon l'une quelconque des revendications précédentes, **caractérisé en ce que** le temps entre deux impulsions de tension est varié.

11. Procédé selon l'une quelconque des revendications précédentes, **caractérisé en ce que** la force contre-électromotrice attendue le long de l'axe de formation de flux est filtrée.

12. Procédé selon l'une quelconque des revendications précédentes, **caractérisé en ce que** le courant mesuré est moyenné sur un certain nombre de points de mesure afin de déterminer la force contre-électromotrice attendue le long de l'axe de formation de flux.

13. Procédé selon l'une quelconque des revendications précédentes, **caractérisé en ce qu'**un filtre de Kalman ou un observateur de Luenberger est utilisé afin de déterminer la force contre-électromotrice attendue le long de l'axe de formation de flux.

**14.** Procédé selon l'une quelconque des revendications précédentes, **caractérisé en ce que** l'angle de rotor connu est déterminé grâce aux étapes ci-dessous consistant à :

    a. appliquer des impulsions de tension au niveau des phases du moteur ;
    b. mesurer un courant au sein desdites phases ;
    c. déterminer l'angle de rotor à partir du courant mesuré, dans lequel seul le courant mesuré à tension nulle au niveau des phases du moteur est utilisé pour déterminer l'angle de rotor.

**15.** Système de moteur permettant de déterminer l'orientation du rotor d'un moteur PMSM sans fer et sans encoches à partir d'un angle de rotor connu, comprenant une unité de traitement permettant de former une intégrale de la force contre-électromotrice attendue et/ou de former la fonction de cumul basée sur un filtre, une mémoire permettant de stocker une valeur de seuil prédéterminée de l'intégrale de la force contre-électromotrice attendue, une unité de comparaison permettant de comparer l'intégrale de la force contre-électromotrice attendue avec la valeur de seuil prédéterminée, dans lequel le système de moteur convient pour la mise en œuvre d'un procédé comprenant une étape de prédéfinition d'un système de rotor sous la forme du système de coordonnées solidaire du rotor, obtenu grâce à une transformation de Park en fonction de l'angle de rotor, une étape d'application d'impulsions de tension au niveau des phases du moteur dans le sens de génération de couple du système de rotor, une étape de mesure du courant au sein des phases du moteur, une étape de détermination de la force contre-électromotrice attendue le long de l'axe de formation de flux à partir du courant mesuré, une étape de formation d'une intégrale de la force contre-électromotrice attendue grâce à une intégration temporelle de la force contre-électromotrice attendue le long de l'axe de formation de flux et/ou une étape de formation d'une fonction de cumul basée sur un filtre ainsi qu'une étape de détermination de l'orientation du rotor à partir du signe de l'intégrale de la force contre-électromotrice attendue le long de l'axe de formation de flux et/ou à partir du signe de la fonction de cumul basée sur un filtre.

Fig. 1

Fig. 2

## Fig. 3

# Fig. 4a

# Fig. 4b

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 2924870 A1

- EP 2698916 A2

### In der Beschreibung aufgeführte Nicht-Patentliteratur

- **M. SCHROEDL.** *ETEP,* Januar 1991, vol. 1 (1), 47-53

- **D. BASIC ; F. MALRAIT ; P. ROUCHON.** *Industrial Electronics, IEEE Transactions on,* vol. 58 (9), 4010-4022